# EUROPEAN PATENT APPLICATION

(11) **EP 4 539 229 A1**
(43) Date of publication of application: **16.04.2025**
(21) Application number: 24195082.3
(22) Date of filing: 19.08.2024
(51) Int. Cl.: H01M 50/247, H01M 50/296, H02J 7/00

(54) **BATTERY PACK**

(30) Priority: 10.10.2023 CN 202311310643
(71) Applicant: Nanjing Chervon Industry Co., Ltd., Nanjing, Jiangsu 211106 (CN)
(72) Inventor: LI, Jing, Nanjing (CN); HU, Xue, Nanjing (CN)
(74) Representative: Sun, Yiming

(57) **Abstract**

A battery pack (100) includes at least a first interface (13) configured to be connectable to a first charging device; and a second interface (14) configured to be connectable to a second charging device. The first interface includes a power terminal (13a) and multiple non-power terminals (13b). When the second interface (14) is connected to the second charging device, a terminal state of at least one of the multiple non-power terminals (13b) changes so that the first interface (13) is in a non-charging state.

## Description

### TECHNICAL FIELD

The present application relates to an energy storage device and, in particular, to a battery pack.

### BACKGROUND

A portable power tool is applicable in various scenarios of production and life. A rechargeable battery pack is configured to power the power tool so that the power tool is free from wires and more convenient for a user to use. Generally, an external charging/discharging interface terminal on the battery pack can be connected to a power interface of the power tool and can also be connected to a charging port of a battery pack charger. With the development of battery pack technologies, the design of a Type-C interface on the battery pack for the power tool has gradually become a new development trend. In this manner, the battery pack for the power tool can supply power to a mobile terminal or other electrical devices with Type-C interfaces and can be charged using a Type-C charger, providing more room for the development of the battery pack.

However, the battery pack for the power tool with the conventional charging/discharging terminal and the Type-C interface has certain safety risks when being charged through the conventional charging terminal and the Type-C interface at the same time.

This part provides background information related to the present application, and the background information is not necessarily the existing art.

### SUMMARY

To solve the deficiencies in the existing art, an object of the present application is to provide a battery pack for a power tool that can avoid charging using both a conventional terminal and a Type-C interface at the same time.

To achieve the preceding object, the present application adopts the technical solutions below.

A battery pack includes at least a first interface configured to be connectable to a first charging device; and a second interface configured to be connectable to a second charging device. The first interface includes a power terminal and multiple non-power terminals. In the case where the second interface is connected to the second charging device, a terminal state of at least one of the multiple non-power terminals changes so that the first interface is in a non-charging state.

In an example, the second interface is a Type-C interface. This feature may be combined with one or more other features.

In an example, a change of the terminal state of a non-power terminal of the multiple non-power terminals includes a change of an object connected to an input terminal and/or output terminal of the non-power terminal or includes a change of an electrical signal at the input terminal or output terminal of the non-power terminal.

In an example, the battery pack further includes a charging control circuit configured to control a terminal connection state of the at least one of the multiple non-power terminals. This feature may be combined with one or more other features.

In an example, the charging control circuit includes a detection circuit that is capable of detecting at least whether the second interface is connected to the second charging device. This feature may be combined with one or more other features.

In an example, the charging control circuit includes a terminal control circuit electrically connected to at least a non-power terminal of the multiple non-power terminals; where when the detection circuit detects that the second interface is connected to the second charging device, the terminal control circuit is configured to control the at least one of the multiple non-power terminals to be grounded. This feature may be combined with one or more other features.

In an example, the detection circuit includes a control device connected between the second interface and the terminal control circuit and when the second interface is connected to the second charging device, controlling the terminal control circuit to operate so that the at least one of the multiple non-power terminals is grounded. This feature may be combined with one or more other features.

In an example, the terminal control circuit includes a thermistor and a controllable switch connected in parallel; and the control device is configured to, when the second interface is connected to the second charging device, control the controllable switch to be turned on. This feature may be combined with one or more other features.

In an example, the terminal control circuit includes a thermistor and a controllable switch connected in parallel, where an end of the thermistor and the controllable switch connected in parallel is connected to the non-power terminal, and the other end of the thermistor and the controllable switch connected in parallel is grounded.

In an example, the multiple non-power terminals include a communication terminal and/or a temperature collection terminal. This feature may be combined with one or more other features.

In an example, the detection circuit and the control device are disposed in one circuit. This feature may be combined with one or more other features.

In an example, the battery pack further includes a component configured to have functions of the detection circuit and the control device. This feature may be combined with one or more other features.

A battery pack includes at least a first interface configured to be connectable to a first charging device; and a second interface configured to be connectable to a second charging device, where when the second interface is connected to the second charging device, the first interface is in a non-charging state.

In an example, the second interface is a Type-C interface. This feature may be combined with one or more other features.

In an example, the charging protection function includes at least one of over-temperature protection, short-circuit protection, reverse connection protection, or low-voltage protection. This feature may be combined with one or more other features.

In an example, the battery pack further includes a charging control circuit configured to control the terminal connection state of the at least one of the multiple non-power terminals. This feature may be combined with one or more other features.

In an example, the charging control circuit includes a detection circuit that is capable of detecting at least whether the second interface is connected to the second charging device. This feature may be combined with one or more other features.

In an example, the charging control circuit includes a terminal control circuit electrically connected to at least a non-power terminal of the multiple non-power terminals; where when the detection circuit detects that the second interface is connected to the second charging device, the terminal control circuit is configured to control the at least one of the multiple non-power terminals to be grounded. This feature may be combined with one or more other features.

In an example, the detection circuit includes a control device connected between the second interface and the terminal control circuit and when the second interface is connected to the second charging device, controlling the terminal control circuit to operate so that the at least one of the multiple non-power terminals is grounded. This feature may be combined with one or more other features.

In an example, the terminal control circuit includes a thermistor and a controllable switch connected in parallel; and the control device is configured to, when the second interface is connected to the second charging device, control the controllable switch to be turned on. This feature may be combined with one or more other features.

In an example, the multiple non-power terminals include a communication terminal and/or a temperature collection terminal. This feature may be combined with one or more other features.

A battery pack includes at least a first interface configured to be connectable to a first charging device; and a second interface configured to be connectable to a second charging device. After the second interface is connected to the second charging device and an interface state of the first interface changes, the first charging device connected to the first interface triggers at least one charging protection function.

In an example, the second interface is a Type-C interface. This feature may be combined with one or more other features.

In an example, the battery pack further includes a charging control circuit configured to control a terminal connection state of the at least one of the multiple non-power terminals. This feature may be combined with one or more other features.

In an example, the charging control circuit includes a detection circuit that is capable of detecting at least whether the second interface is connected to the second charging device. This feature may be combined with one or more other features.

In an example, the charging control circuit includes a terminal control circuit electrically connected to at least a non-power terminal of the multiple non-power terminals; where when the detection circuit detects that the second interface is connected to the second charging device, the terminal control circuit is configured to control the at least one of the multiple non-power terminals to be grounded. This feature may be combined with one or more other features.

In an example, the detection circuit includes a control device connected between the second interface and the terminal control circuit and when the second interface is connected to the second charging device, controlling the terminal control circuit to operate so that the at least one of the multiple non-power terminals is grounded. This feature may be combined with one or more other features.

In an example, the terminal control circuit includes a thermistor and a controllable switch connected in parallel; and the control device is configured to, when the second interface is connected to the second charging device, control the controllable switch to be turned on. This feature may be combined with one or more other features.

In an example, the multiple non-power terminals include a communication terminal and/or a temperature collection terminal. This feature may be combined with one or more other features.

An electrical system includes a first charging device; a second charging device; and a battery pack including a first interface configured to be connectable to the first charging device and a second interface configured to be connectable to the second charging device. In the case where the second interface is connected to the second charging device, an interface state of the first interface changes so that the first charging device connected to the first interface triggers at least one charging protection function.

In an example, the second interface is a Type-C interface. This feature may be combined with one or more other features.

In an example, the battery pack further includes a charging control circuit configured to control a terminal connection state of the at least one of the multiple non-power terminals. This feature may be combined with one or more other features.

In an example, the charging control circuit includes a detection circuit that is capable of detecting at least whether the second interface is connected to the second charging device. This feature may be combined with one or more other features.

In an example, the charging control circuit includes a terminal control circuit electrically connected to at least a non-power terminal of the multiple non-power terminals; where when the detection circuit detects that the second interface is connected to the second charging device, the terminal control circuit is configured to control the at least one of the multiple non-power terminals to be grounded. This feature may be combined with one or more other features.

In an example, the detection circuit includes a control device connected between the second interface and the terminal control circuit and when the second interface is connected to the second charging device, controlling the terminal control circuit to operate so that the at least one of the multiple non-power terminals is grounded. This feature may be combined with one or more other features.

In an example, the terminal control circuit includes a thermistor and a controllable switch connected in parallel; and the control device is configured to, when the second interface is connected to the second charging device, control the controllable switch to be turned on. This feature may be combined with one or more other features.

In an example, the multiple non-power terminals include a communication terminal and/or a temperature collection terminal. This feature may be combined with one or more other features.

A battery pack includes a housing assembly; multiple cells disposed in the housing assembly; a first interface configured to be connectable to a first charging device; and a second interface configured to be connectable to a second charging device. The first interface includes a power terminal and multiple non-power terminals. In the case where the second interface is connected to the second charging device, terminal states of the power terminal and/or a non-power terminal of the multiple non-power terminals change so that the first interface is in a non-charging state.

A battery pack includes a housing assembly; multiple cells disposed in the housing assembly; a first interface configured to be connectable to a first charging device; and a second interface configured to be connectable to a second charging device. The first interface includes a power terminal and multiple non-power terminals. In the case where the second interface is connected to the second charging device, a terminal state of the power terminal changes so that the first interface is in a non-charging state.

### BRIEF DESCRIPTION OF DRAWINGS

FIG. 1 is a schematic view of a power supply system of a battery pack according to an example.
FIG. 2 is a schematic view of a charging system of a battery pack according to an example.
FIG. 3 is a schematic diagram of an internal charging control circuit of a battery pack according to an example.
FIG. 4 is a schematic diagram of an internal charging control circuit of a battery pack according to an example.

### DETAILED DESCRIPTION

Before any example of the present application is explained in detail, it is to be understood that the present application is not limited to its application to the structural details and the arrangement of components set forth in the following description or illustrated in the preceding drawings.

In the present application, the term "comprising", "including", "having", or any other variant thereof is intended to encompass a non-exclusive inclusion so that a process, method, article, or device that includes a series of elements not only includes those elements but also includes other elements that are not expressly listed or further includes elements that are inherent to such a process, method, article, or device. In the absence of more limitations, an element defined by the statement "including a ..." does not exclude the presence of additional identical elements in a process, method, article, or device including the element.

In the present application, the term "and/or" is an association relationship describing associated objects and indicates that three relationships may exist. For example, A and/or B may indicate that A exists alone, both A and B exist, and B exists alone. In addition, in the present application, the character "/" generally indicates an "and/or" relationship between associated objects before and after the character "/".

In the present application, the term "connected", "combined", "coupled", or "mounted" may be directly "connected", "combined", "coupled", or "mounted" and may also be indirectly "connected", "combined", "coupled", or "mounted". Among them, for example, direct connection means that two parts or assemblies are connected together without intermediate pieces, and indirect connection means that two parts or assemblies are separately connected to at least one intermediate piece and the two parts or assemblies are connected to each other by the at least one intermediate piece. Furthermore, "connected" and "coupled" are not limited to physical or mechanical connections or couplings and may include electrical connections or couplings.

In the present application, it is to be understood by those of ordinary skill in the art that a relative term (for example, "about", "approximately", or "basically") used in conjunction with quantities or conditions is inclusive of the stated value and has the meaning indicated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus a certain percentage (such as 1%, 5%, 10%, or more) of an indicated value. A value not modified by the relative term should also be disclosed as a particular value with a tolerance. In addition, when expressing a relative angular position relationship (for example, basically parallel or basically perpendicular), "basically" may refer to plus or minus a certain degree (such as 1 degree, 5 degrees, 10 degrees, or more) based on an indicated angle.

In the present application, it is to be understood by those of ordinary skill in the art that the function implemented by an assembly may be implemented by one assembly, multiple assemblies, one part, or multiple parts. Similarly, a function implemented by a part may be implemented by one part, one assembly, or a combination of parts.

In the present application, the terms "upper", "lower", "left", "right", "front", "rear", and other orientation words are described by the orientations and position relations shown in the drawings and should not be understood as a limitation to the examples of the present application. In addition, in this context, it also needs to be understood that when it is mentioned that an element is connected "above" or "below" another element, the element not only can be directly connected "above" or "below" the other element but also can be indirectly connected "above" or "below" the other element through an intermediate element. Further, it should be understood that orientation words such as the upper side, lower side, left side, right side, front side, and rear side not only represent perfect orientations but also may be understood as lateral orientations. For example, the lower part may include directly below, lower left, lower right, lower front, and lower back.

In the present application, the terms "controller", "processor", "central processing unit", "CPU", and "MCU" are interchangeable. Where a unit such as the "controller", the "processor", the "central processing unit", the "CPU", or the "MCU" is used to implement specific functions, these functions may be implemented by a single one of the preceding units or multiple preceding units unless otherwise indicated.

In the present application, the term "device", "module", or "unit" is used to implement a specific function in the form of hardware or software.

In the present application, the terms "computing", "judging", "controlling", "determining", "identifying", and the like refer to the operation and processes of a computer system or similar electronic computing device (for example, the controller, the processor, or the like).

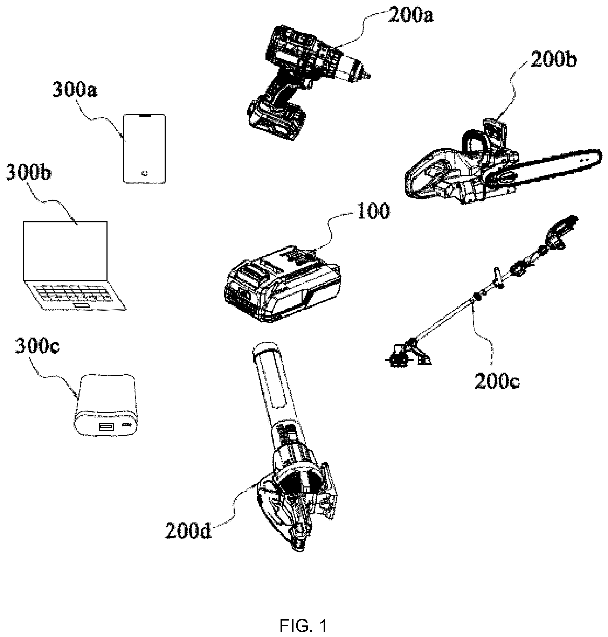

In this example, various power tools 200 can be powered by a battery pack 100. FIG. 1 illustrates several common power tools, such as an electric drill 200a, a chainsaw 200b, a string trimmer 200c, and a blower 200d. It is to be noted that the power tool 200 may be a handheld power tool, such as a drill, a hedge trimmer, or a sander. Alternatively, the power tool 200 may be a table tool, such as a table saw or a miter saw. Alternatively, the power tool 200 may be a push power tool, such as a push mower or a push snow thrower. Alternatively, the power tool 200 may be a riding power tool, such as a riding mower, a riding vehicle, or an all-terrain vehicle. Alternatively, the power tool 200 may be a robotic tool, such as a robotic mower or a robotic snow thrower. In some examples, the power tool 200 may be an electric drill, an electric lamp, an electric vehicle, or the like. In some examples, the power tool 200 may be a garden tool, such as a hedge trimmer, a blower, a mower, or a chainsaw. Alternatively, the power tool 200 may be a decorating tool, such as a screwdriver, a nail gun, a circular saw, or a sander. In some examples, the power tool 200 may be a vegetation care tool, such as a string trimmer, a mower, a hedge trimmer, or a chainsaw. Alternatively, the power tool 200 may be a cleaning tool, such as a blower, a snow thrower, or a washer. Alternatively, the power tool 200 may be a drilling tool, such as a drill, a screwdriver, a wrench, or an electric hammer. Alternatively, the power tool 200 may be a sawing tool, such as a reciprocating saw, a jigsaw, or a circular saw. Alternatively, the power tool 200 may be a table tool, such as a table saw, a miter saw, a metal cutter, or an electric router. Alternatively, the power tool 200 may be a sanding tool, such as an angle grinder or a sander.

In this example, various electrical devices 300 may be powered by the battery pack 100. The electrical devices may be other household appliances or personal electrical devices in addition to the preceding power tools 200, such as a smartphone 300a, a laptop 300b, and a mobile power supply 300c in FIG. 1, or the electrical devices may be a soy milk maker, a grinder, and the like.

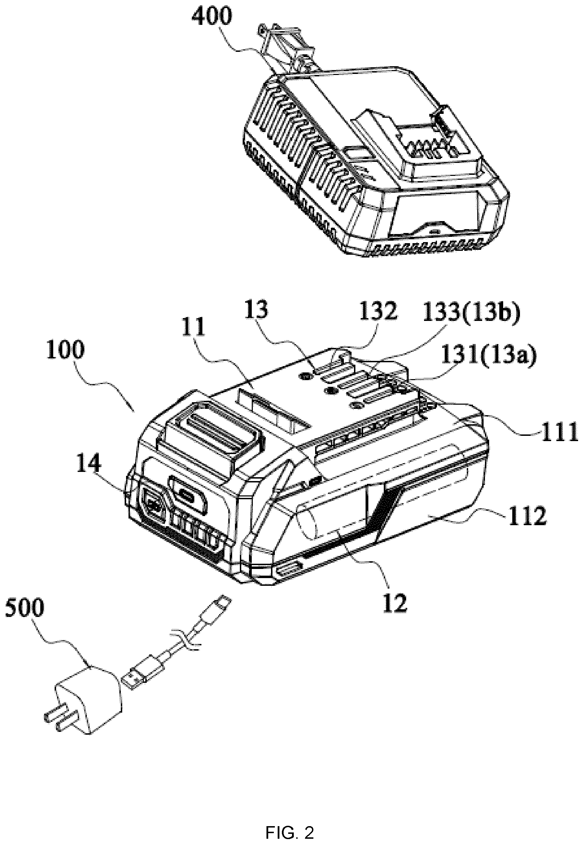

The battery pack 100 shown in FIG. 2 may include a housing assembly 11, multiple cells 12 accommodated in the housing assembly 11, and a first interface 13 and a second interface 14 formed on the housing assembly 11. The housing assembly 11 may include an upper housing 111 and a lower housing 112. The multiple cells 12 accommodated in the housing assembly 11 may be connected in various manners, such as connection in series, connection in parallel, or a combination of connection in series and connection in parallel. This example does not limit the connection manners of the cells 12.

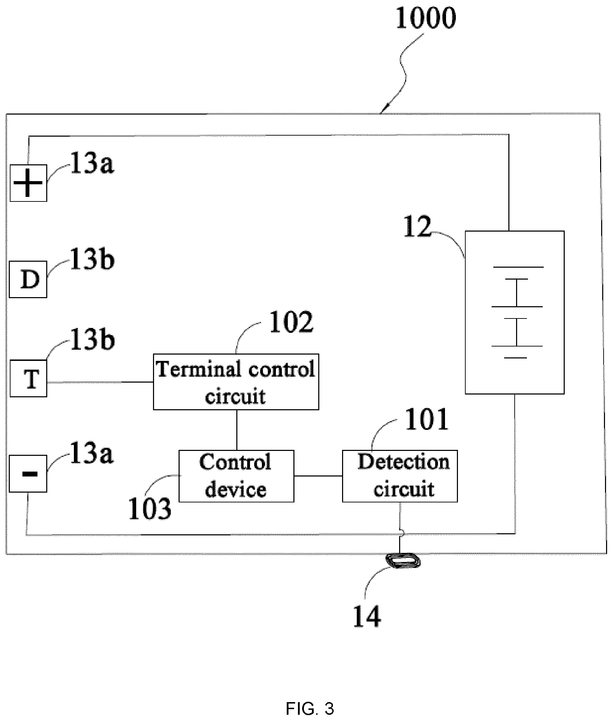

Referring to FIGS. 2 and 3, the first interface 13 may be connected to a first charging device 400 so that the cells 12 in the battery pack 100 are charged. In this example, the first interface 13 may include at least a positive connection terminal 131 and a negative connection terminal 132 or may further include a communication terminal 133, and the positive connection terminal 131, the negative connection terminal 132, and the communication terminal 133 can be directly coupled to charging terminals on the first charging device 400. In this example, the first interface 13 may be directly coupled to a power interface on the power tool 200 so that the power tool 200 is powered. In this example, the first interface 13 may further include power terminals 13a and a non-power terminal 13b. The so-called power terminals 13a may be the preceding positive connection terminal 131 and the preceding negative connection terminal 132, and the non-power terminal 13b may be the communication terminal 133 and may further include a temperature detection terminal T or an ID identification terminal B.

The second interface 14 may be a Type-C interface and is connectable to a second charging device 500 so that the cells 12 in the battery pack 100 are charged. Further, the second interface 14 is connectable to the electrical device 300 with a Type-C interface so that the electrical device 300 is powered.

In an example, the second charging device 500 may be a charger for a mobile phone or a computer.

In an example, the first interface 13 and the second interface 14 can work simultaneously. For example, the battery pack 100 may be charged through the first interface 13 and discharged through the second interface 14 at the same time; or the battery pack 100 may be discharged through the first interface 13 and charged through the second interface 14 at the same time; or the battery pack 100 may be charged through the first interface 13 and charged through the second interface 14 at the same time. In some examples, the battery pack 100 may be discharged through the first interface 13 and discharged through the second interface 14 at the same time. However, in fact, when charging is performed through the two interfaces at the same time, the battery pack 100 has certain safety risks. For example, the charging systems of the two interfaces are independent of each other; when the cells are charged through the two interfaces at the same time, the current may exceed the maximum allowable charge current of the cells, affecting the safety of the cells.

To avoid the case where charging is performed through the two interfaces at the same time, at least the charging state of the first interface 13 may be controlled. For example, whether charging is performed through the first interface 13 is controlled according to the charging situation of the second interface 14. In fact, after the second interface 14 of the battery pack 100 is connected to the second charging device 500, the first interface 13 may be controlled such that charging cannot be performed through the first interface 13, or the first interface 13 is controlled to be in a non-charging state. The first interface 13 being in the non-charging state may be understood as that the charging circuit in the battery pack 100 cannot obtain charging electrical energy through the first interface 13 or may be understood as that the first charging device 400 connected to the first interface 13 cannot charge the battery pack 100.

Referring to FIG. 3, a charging control circuit 1000 is disposed in the battery pack 100. The charging control circuit 1000 can control at least the charging state of the first interface 13. In this example, the charging control circuit 1000 may include at least a detection circuit 101, a terminal control circuit 102, and a control device 103. The detection circuit 101 is capable of detecting at least whether the second interface 14 is connected to the second charging device 500. The terminal control circuit 102 can change at least the terminal state of the non-power terminal 13b. The control device 103 is configured to be capable of controlling the terminal control circuit 102 to operate to change the terminal state of the non-power terminal 13b. It is to be noted that the change of the terminal state may be understood as a change of an object connected to an input terminal and/or output terminal of the power terminal 13a and/or the non-power terminal 13b in the charging control circuit 1000 or may be understood as a change of an electrical signal at the input terminal or output terminal of the power terminal 13a and/or the non-power terminal 13b.

In some examples, in the charging control circuit 1000, the detection circuit 101 and the control device 103 of the terminals may be disposed in one circuit. Alternatively, one element can detect whether the second interface 14 is connected to the second charging device 500 and control the terminal control circuit 102 to operate, that is, one element can implement the functions of the detection circuit 101 and the control device 103.

In this example, the detection circuit 101 may determine whether the second interface 14 is connected to the second charging device 500 according to the change of the electrical signal at the second interface 14. Alternatively, a control chip identifies the communication data to determine whether the second interface 14 is connected to the second charging device 500.

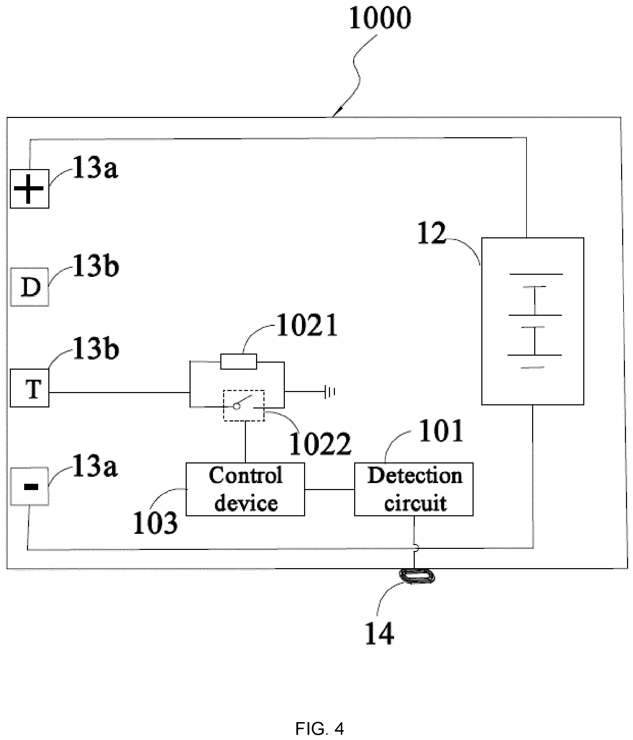

In this example, the control device 103 may determine whether the second interface 14 is connected to the second charging device 500 according to the electrical signal at the second interface 14 detected by the detection circuit 101. When the control device 103 determines that the second interface 14 is connected to the second charging device 500, the control device 103 may control the terminal control circuit 102 to operate so that a terminal connection state of at least one non-power terminal 13b changes. For example, one non-power terminal 13b may be changed from an original non-grounded state to a grounded state. In FIG. 4, the terminal control circuit 102 may include a thermistor 1021 and a controllable switch 1022 connected in parallel, where an end of the thermistor 1021 and the controllable switch 1022 connected in parallel is connected to a non-power terminal T, and the other end of the thermistor 1021 and the controllable switch 1022 connected in parallel is grounded. When the control device 103 determines that the second interface 14 is connected to the second charging device 500, the control device 103 controls the controllable switch 1022 to be turned on so that the thermistor 1021 is shorted to ground and the non-power terminal T is grounded. After the thermistor terminal 1021 is shorted to ground, the first charging device 400 connected to the first interface 13 can monitor the abnormal temperature at the non-power terminal T of the battery pack 100 so that over-temperature protection is performed to stop charging the battery pack 100 or not charge the battery pack 100. That is to say, when the second interface 14 is connected to the second charging device 500, the charging control circuit 1000 can change at least the connection state of the non-power terminal 13b so that the first charging device 400 connected to the first interface 13 can trigger one or more charging protection functions according to the connection state of the non-power terminal 13b, thereby preventing the battery pack 100 from being charged through the first charging device 400. The charging protection function triggered by the first charging device 400 according to the connection state of the non-power terminal 13b may include over-temperature protection, short-circuit protection, reverse connection protection, or low-voltage protection.

In this example, the change of an interface state of the first interface 13 may cause the following: when the first charging device 400 is connected to the first interface 13, it is considered that the battery pack 100 may be overheated, or part of the circuit is accidentally short-circuited, or the charging interface of the first charging device 400 is reversely connected to the first interface 13, or the voltage of the battery pack 100 is too low to match the first charging device 400. The preceding problems cause the first charging device 400 to trigger charging protection and not charge the battery pack 100. In fact, the battery pack 100 in the present application may not have the preceding problems, and by changing the interface state of the first interface 13 or changing at least the terminal connection state of the non-power terminal 13b, the first charging device 400 mistakenly believes that the battery pack 10 has the preceding problems, and then the first charging device 400 triggers charging protection. In this manner, the battery pack 100 can be prevented from being charged through the first interface 13 and the second interface 14 at the same time 4.

In some examples, when the second interface 14 is connected to the second charging device 500, the charging control circuit 1000 can change at least the connection state of the non-power terminal 13b so that a battery management module in the battery pack 100 can trigger the charging protection function of the battery pack 100 or trigger at least the charging protection function of charging through the first interface 13.

In other examples, the battery pack 100 can change the interface state of the first interface 13 so that the power tool 200 connected to the first interface 13 triggers a discharging protection function. In this manner, the battery pack 100 cannot be discharged through the first interface 13 while being charged through the second interface 14.

The basic principles, main features, and advantages of the present application are shown and described above. It is to be understood by those skilled in the art that the preceding examples do not limit the present application in any form, and all technical solutions obtained through equivalent substitutions or equivalent transformations fall within the scope of the present application.

## Claims

1. A battery pack (100) for a power tool (200), comprising:
a housing assembly (11);
a plurality of cells (12) disposed in the housing assembly;
a first interface (13) configured to be connectable to a first charging device (400) or the power tool; and
a second interface (14) configured to be connectable to a second charging device (500);
wherein the first interface comprises at least one non-power terminal (13b);
wherein in a case where the second interface is connected to the second charging device, a terminal state of at least one of the at least one non-power terminal changes so that the first interface is in a non-charging state.

2. The battery pack of claim 1, wherein the second interface is a Type-C interface.

3. The battery pack of claim 1, wherein a change of the terminal state of the at least one of the at least one non-power terminal comprises a change of an object connected to an input terminal and/or output terminal of the at least one of the at least one the non-power terminal or comprises a change of an electrical signal at the input terminal or output terminal of the at least one of the at least one non-power terminal.

4. The battery pack of claim 1, further comprising a charging control circuit (1000) configured to control a terminal connection state of the at least one of the at least one non-power terminal.

5. The battery pack of claim 4, wherein the charging control circuit comprises a detection circuit (101) that is capable of detecting at least whether the second interface is connected to the second charging device and a terminal control circuit (102) electrically connected to the at least one of the at least one non-power terminal, and the terminal control circuit is configured to control the at least one of the at least one non-power terminal to be grounded when the detection circuit detects that the second interface is connected to the second charging device.

6. The battery pack of claim 5, wherein the charging control circuit further comprises a control device (103) connected between the second interface and the terminal control circuit and controlling the terminal control circuit to operate so that the at least one of the at least one non-power terminal is grounded when the second interface is connected to the second charging device.

7. The battery pack of claim 6, wherein the terminal control circuit comprises a thermistor (1021) and a controllable switch (1022) connected in parallel, an end of the thermistor and the controllable switch connected in parallel is connected to the at least one non-power terminal, and another end of the thermistor and the controllable switch connected in parallel is grounded.

8. The battery pack of claim 7, wherein the control device is configured to control the controllable switch to be turned on when the second interface is connected to the second charging device.

9. The battery pack of claim 7, wherein the detection circuit and the control device are disposed in one circuit.

10. The battery pack of claim 7, further comprising a component configured to have functions of the detection circuit and the control device.

11. The battery pack of claim 1, wherein the at least one non-power terminal comprise a communication terminal (133) and/or a temperature collection terminal.

12. The battery pack of claim 1, wherein when the first interface is in the non-charging state, the first charging device connected to the first interface triggers at least one charging protection function.

13. The battery pack of claim 1, wherein the at least one charging protection function comprises at least one of over-temperature protection, short-circuit protection, reverse connection protection, or low-voltage protection.
